# EUROPÄISCHE PATENTANMELDUNG

(11) **EP 1 665 934 A2**
(43) Veröffentlichungstag der Anmeldung: **07.06.2006**
(21) Anmeldenummer: 05025434.1
(22) Anmeldetag: 22.11.2005
(51) Int. Cl.: A21C 9/06

(54) **Vorrichtung zur Herstellung von Teigtaschen**

(30) Priorität: 23.11.2004 DE 202004018188 U
(71) Anmelder: Hübener, Paul, 42799 Leichlingen (DE)
(72) Erfinder: Hübener, Paul, 42799 Leichlingen (DE)
(74) Vertreter: DR. STARK & PARTNER

(57) **Zusammenfassung**

Die Erfindung betrifft eine handbetätigte Vorrichtung zur Herstellung wenigstens einer Teigtasche.

Um eine handbetätigte Herstellung einer Teigtasche zu vereinfachen und insbesondere ein zuverlässiges Verschließen einer Teigtasche bei einem gleichzeitigen Ausstechen einer Teigtasche zu ermöglichen, soll die handbetätigte Vorrichtung einen ersten (1) und einen zweiten Rahmen (2) umfassen, die mittels zumindest eines Scharnierelementes (5) stirnseitig aufeinanderklappbar sind, wobei der erste Rahmen (1) mit einem ersten (304) und der zweite Rahmen (2) mit einem zweiten stirnseitigen Quetschprofil (305) ausgestattet sind, durch welche in einem aufeinandergeklappten Zustand gegenüberliegende Trennkanten gebildet sind.

## Beschreibung

Die Erfindung betrifft eine handbetätigte Vorrichtung für eine Herstellung wenigstens einer Teigtasche.

Teigtaschen werden in vielfältigen Varianten im Lebensmittelbereich verwendet. Dabei wird insbesondere eine Füllung von einer Teigumhüllung umgeben.

Aufgabe der vorliegenden Erfindung ist es, eine handbetätigte Herstellung einer Teigtasche zu vereinfachen und insbesondere ein zuverlässiges Verschließen einer Teigtasche bei einem gleichzeitigen Ausstechen einer Teigtasche zu ermöglichen:

Erfindungsgemäß wird diese Aufgabe durch eine handbetätigte Vorrichtung nach Anspruch 1 gelöst. Vorteilhafte Weiterbildungen sind in den jeweiligen abhängigen Ansprüchen angegeben.

Eine erfindungsgemäße handbetätigte Vorrichtung für eine Herstellung wenigstens einer Teigtasche umfasst einen ersten und einen zweiten Rahmen, die mittels zumindest eines Scharnierelementes stirnseitig aufeinanderklappbar sind, wobei der erste Rahmen mit einem ersten und der zweite Rahmen mit einem zweiten stirnseitigen Quetschprofil ausgestattet sind, durch welche in einem aufeinandergeklappten Zustand gegenüberliegende Trennkanten gebildet sind.

Die Rahmen weisen dabei beispielsweise eine rechteckige umschlossene Querschnittfläche auf. Des Weiteren kann diese jedoch auch andere Formen, insbesondere eine runde, eine dreieckige, eine polygonale oder eine allgemein unregelmäßige Form aufweisen. Bei einer Teigtasche handelt es sich beispielsweise um eine Maultasche. Des Weiteren handelt es sich beispielsweise um eine gefüllte Backware, insbesondere eine Blätterteigtasche oder dergleichen. Bei einer Herstellung einer Teigtasche wird beispielsweise eine Teiglage auf die Stirnseite des ersten Rahmens gelegt, wobei die Teiglage über den Rahmen übersteht, eine Füllung auf die Teiglage innerhalb des Rahmens gelegt und mit einer zweiten Teiglage bedeckt. Anschließend wird der zweite Rahmen auf den ersten Rahmen geklappt, wobei die gegenüberliegenden Trennkanten wenigstens eine Teigtasche ausstechen und insbesondere einen Rand der Teigtasche verschließen. Der erste und der zweite Rahmen sind dabei vorzugsweise so bemessen, dass eine Querschnittsfläche der Rahmen in etwa der Größe einer oder mehrerer Teigtaschen entspricht. Beispielsweise ist der Rahmen gitterförmig ausgestaltet, so dass gleichzeitig mehrere Teigtaschen geformt werden.

In einer bevorzugten Ausgestaltung ist durch das erste und das zweite stirnseitige Quetschprofil zwischen in einem aufeinandergeklappten Zustand gegenüberliegenden Stirnflächen des ersten und des zweiten Rahmens ein Spalt gebildet, dessen Stärke ausgehend von einem inneren Rand des Rahmens in einem ersten Bereich in etwa einer doppelten Stärke einer Teiglage entspricht, in einem daran anschließenden zweiten Bereich nach außen, insbesondere stetig, auf Null abnimmt, wobei durch den ersten und den zweiten Rahmen in einem an den zweiten Bereich anschließenden äußeren dritten Bereich zwei gegenüberliegende Trennkanten gebildet sind. Beispielsweise werden zwei aufeinanderliegende Teiglagen im ersten Bereich miteinander verklebt. Im zweiten Bereich werden beide Teiglagen insbesondere verdichtet und ebenfalls miteinander verklebt. Im dritten Bereich werden beide Teiglagen vorzugsweise vollständig durchtrennt. In einer ersten Variante sind das erste und das zweite stirnseitige Quetschprofil identisch. In einer zweiten Variante sind das erste und das zweite stirnseitige Quetschprofil unterschiedlich ausgestaltet. Beispielsweise ist in der zweiten Variante das erste stirnseitige Quetschprofil in etwa plan ausgestattet.

Vorzugsweise beträgt eine Breite des ersten Bereiches zwischen einer halben und einer vierfachen, bevorzugt zwischen einer einfachen und einer doppelten, Stärke der Teiglage. Insbesondere wird im ersten Bereich ein Klebebereich gebildet.

In einer vorteilhaften Ausgestaltung ist vorgesehen, dass der erste Rahmen und/oder der zweite Rahmen, insbesondere reversibel lösbar, mit der ersten Schale und/oder der zweiten Schale verbunden sind. Beispielsweise bildet der erste Rahmen mit der ersten Schale eine Einheit. In einer anderen Variante kann der erste Rahmen beispielsweise wiederholbar lösbar in die erste Schale eingesetzt werden. Entsprechendes gilt für den zweiten Rahmen und die zweite Schale. Insbesondere können erster Rahmen und zweiter Rahmen sowie erste Schale und zweite Schale miteinander vertauscht werden. Beispielsweise ist vorgesehen, dass der erste und der zweite Rahmen einen Einsatz bilden, der in die erste und die zweite Schale einsetzbar ist, welche ebenfalls eine Einheit bilden. Beispielsweise können der erste und der zweite Rahmen anstelle eines anderen Einsatzes in die erste und die zweite Schale eingesetzt werden.

Insbesondere für eine Verbindung zwischen einem Rahmen und einer Schale ist vorgesehen, dass der erste und/oder der zweite Rahmen sowie die erste und/oder die zweite Schale zumindest ein Verrastelement umfassen. Bevorzugt ist dazu wenigstens eine Federlasche vorgesehen, die in einer Schale oder in einem Rahmen angebracht ist. Beispielsweise können auch Lochungen mit einem Bajonettverschlusselement vorgesehen werden.

Das Scharnierelement ist vorzugsweise an der ersten und/oder der zweiten Schale und/oder einer Rahmenseite des ersten und/oder des zweiten Rahmens angebracht. In einer ersten Variante ist das Scharnierelement an der ersten und der zweiten Schale angebracht. Der erste und der zweite Rahmen sind dabei insbesondere reversibel lösbar mit der ersten und der zweiten Schale verbunden. In einer zweiten Variante sind sowohl jeweils die erste und die zweite Schale als auch der erste und der zweite Rahmen mit einem Scharnierelement verbunden. In einer dritten Variante ist beispielsweise eine Seite eines Scharniers sowohl mit dem ersten Rahmen als auch mit der ersten Schale verbunden und eine zweite Seite des Scharniers sowohl mit dem zweiten Rahmen als auch mit der zweiten Schale verbunden.

Bevorzugt lässt sich eine einfache Handhabung erzielen, wenn das Scharnierelement wiederholbar trennbar ist. Insbesondere können erster Rahmen, zweiter Rahmen, erste Schale und/oder zweite Schale voneinander getrennt werden. Beispielsweise, kann ein Scharnierstift herausgezogen werden, um eine Trennung des Scharniers zu gewährleisten. In einer anderen Ausgestaltung ist beispielsweise ein hakenförmiger Umgriff um einen Zapfen vorgesehen, der vorzugsweise ab einem bestimmten Öffnungswinkel eine Trennung der beiden Teile voneinander ermöglicht.

Insbesondere für eine verbesserte Befüllbarkeit umfasst der erste und/oder der zweite Rahmen eine dem stirnseitigen Quetschprofil abgewandte zumindest teilweise geschlossene Stirnfläche. Beispielsweise ist die Stirnfläche vollständig geschlossen, so dass der Rahmen zusammen mit dieser Stirnfläche eine Schale bildet. Insbesondere kann die Stirnfläche auch teilweise durchbrochen ausgestaltet sein. Besonders bevorzugt ist die Stirnfläche gitterförmig ausgestaltet. Weiter bevorzugt bildet die Stirnfläche eine Auflagefläche für eine Teigtasche.

In einer bevorzugten Ausgestaltung ist vorgesehen, dass Stirnflächen des ersten und des zweiten Rahmens jeweils eine längs der Trennkanten angeordnete Zahnung aufweisen. Beispielsweise ist die Zahnung wellenförmig ausgestaltet. Insbesondere greift ein Zahn der Stirnfläche des ersten Rahmens in eine Lücke der Stirnseite des zweiten Rahmens. In einer anderen Ausgestaltung ist das Zahnprofil so dimensioniert, dass Zahn auf Zahn und Lücke auf Lücke zur Deckung gebracht werden. Vorzugsweise wird durch eine Zahnung eine wirksame Umfangsfläche des stirnseitigen Quetschprofils vergrößert. Insbesondere wird eine Verklebungsfläche zweier aufeinanderliegender Teiglagen vergrößert.

Für eine erhöhte Variabilität ist bevorzugt vorgesehen, dass der erste und der zweite Rahmen jeweils mit wenigstens einem Steg unterteilbar sind, wobei der Steg ein Stirnprofil aufweist, welches zwei spiegelbildlich aneinandergesetzten Stirnprofilen eines Rahmens entspricht und insbesondere eine gemeinsame Trennkante aufweist. Vorzugsweise ist die gemeinsame Trennkante in der Mitte des Steges angeordnet. Beispielsweise ist bei einem rechteckigen Querschnittsprofil einer umschlossenen Rahmenfläche vorgesehen, dass die Querschnittsfläche mittels zweier Stege in drei Segmente unterteilbar sind. Insbesondere ermöglicht eine derartige Anordnung eine wahlweise Herstellung einer einzigen großen oder dreier kleiner Teigtaschen. Entsprechend kann mit einer anderen Anzahl von Stegen eine andere Anzahl von Segmenten und gleichzeitig herstellbaren Teigtaschen ermöglicht werden.

Für eine zweckmäßige Verbindung zwischen einem Steg und der Vorrichtung ist insbesondere vorgesehen, dass der Steg mittels wenigstens eines Verrastmittels mit der ersten oder zweiten Schale oder dem ersten oder dem zweiten Rahmen verbindbar ist. Beispielsweise weist ein Steg auf einer Unterseite wenigstens einen Zapfen auf, der in ein Loch beispielsweise in der ersten oder der zweiten Schale oder einer Stirnfläche des ersten oder zweiten Rahmenelementes eingesteckt werden kann. - insbesondere weist dieser Zapfen ein Verrastelement auf. Anstelle eines Zapfens kann beispielsweise auch eine Federlasche oder dergleichen verwendet werden. Insbesondere kann ein Zapfen auch einen hammerförmigen Kopf aufweisen, so dass eine Verrastung beispielsweise mittels eines Längsloches mit einem variierenden Querschnitt gewährleistet werden kann. In einer anderen Ausgestaltung kann ein Zapfen auch an den Enden eines Steges angeordnet sein. Entsprechend kann zur Befestigung in einem inneren Umfang des ersten oder zweiten Rahmens ein Befestigungsloch oder dergleichen vorgesehen sein.

Besonders bevorzugt umfasst die handbetätigte Vorrichtung auf einer Unterseite wenigstens ein rutschhemmendes Element. Beispielsweise weist die Unterseite einen oder mehrere Gummifüße auf. Des Weiteren kann beispielsweise wenigstens ein Saugnapf vorgesehen werden. Vorzugsweise wird eine Fixierung der Tischvorrichtung auf einer Unterlage, beispielsweise auf einem Arbeitstisch ermöglicht.

Besonders vorteilhaft ist als Material für einen Rahmen, eine Schale; ein Scharnierelement und einen Trennsteg jeweils ein Material aus der Gruppe Kunststoff, Metall, Metalllegierung oder Holz ausgewählt. Insbesondere kann ein Rahmen aus Metall gefertigt sein, wohingegen eine Schale aus Kunststoff gefertigt ist. Des Weiteren sind prinzipiell beliebige Materialkombinationen untereinander möglich.

Vorzugsweise für eine Verringerung eines Verschleißes ist vorgesehen, dass die handbetätigte Vorrichtung ein Quetschprofil aus einem anderen Material als dem des ersten und/oder zweiten Rahmens umfasst. Beispielsweise ist ein Quetschprofil aus einem Metall oder einer Metalllegierung auf einem aus Kunststoff gefertigten Rahmen aufgesetzt. Bevorzugt ist ein Quetschprofil insbesondere austauschbar auf einem Rahmen angebracht.

Im Folgenden wird die Erfindung anhand der Zeichnung exemplarisch erläutert. Die Merkmale sind dort jeweils jedoch nicht auf die einzelnen Ausgestaltungen beschränkt. Vielmehr sind jeweils in der Zeichnung und/oder der Beschreibung einschließlich der Figurenbeschreibung angegebene Merkmale jeweils zu Weiterbildungen kombinierbar.

Es zeigen:

**Fig**. 1 eine erste Tischvorrichtung,

**Fig**. 2 eine zweite Tischvorrichtung,

**Fig**. 3 einen Querschnitt eines Spaltes und

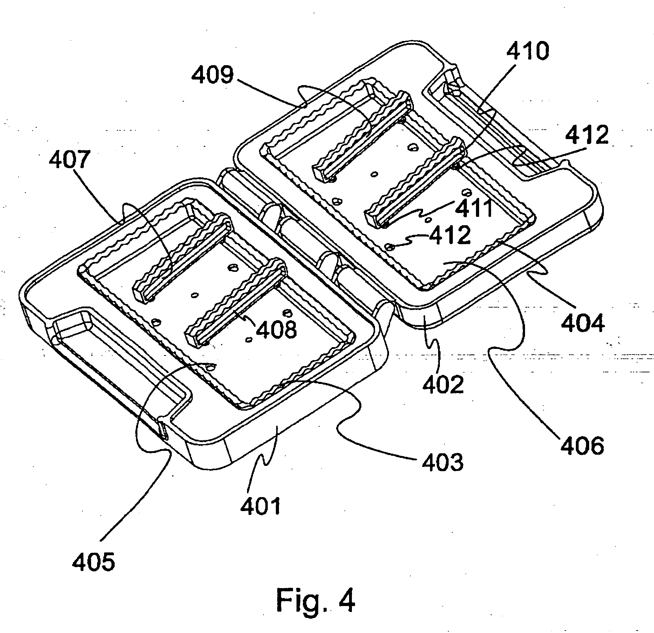

Fig. 4 eine dritte Tischvorrichtung.

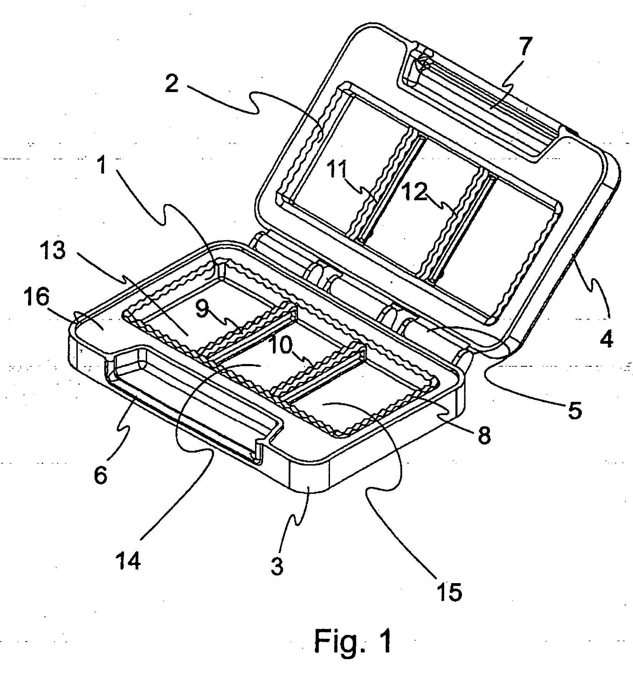

Fig. 1 zeigt eine erste Tischvorrichtung. Ein erster Rahmen **1** und ein zweiter Rahmen **2** sind in einer ersten Schale **3** und einer zweiten Schale **4** angeordnet. Die erste Schale **3** und die zweite Schale **4** sind mit einem Scharnier **5** miteinander verbunden, so dass sie mit ihren Stirnseiten aufeinandergeklappt werden können. Dazu ist in der ersten Schale **3** ein erster Griff **6** und in der zweiten Schale **4** ein zweiter Griff **7** vorgesehen. Der erste Rahmen **1** und der zweite Rahmen **2** weisen jeweils ein Zahnprofil **8** auf. Des Weiteren ist jeweils ein erster unterer Steg **9**, ein zweiter unterer Steg **10**, ein erster oberer Steg **11** und ein zweiter oberer Steg **12** vorgesehen, um eine Unterteilung des ersten Rahmens 1 und des zweiten Rahmens **2** vorzusehen. In diesem gezeigten Beispiel können drei Teigtaschen gleichzeitig ausgestochen und geschlossen werden. Dazu wird beispielsweise eine hier nicht gezeigte Teiglage auf den ersten Rahmen **1** gelegt, so dass die Ränder der Teiglage über den ersten Rahmen **1** hinausragen. Anschließend wird jeweils in die erste Mulde **13**, in die zweite Mulde **14** und in die dritte Mulde **15** eine hier ebenfalls nicht gezeigte Füllung gegeben und anschließend eine zweite hier ebenfalls nicht gezeigte Teiglage darüber gelegt. Schließlich wird die zweite Schale **4** mit dem zweiten Rahmen **2** auf die erste Schale **3** mit dem ersten Rahmen **1** geklappt, wodurch die Teiglagen entlang dem ersten und dem zweiten Rahmen miteinander verbunden werden und beide Teiglagen vollständig durchtrennt werden. Bei einem Schneidvorgang abfallende Teigreste werden vorzugsweise von der vierten Mulde **16**, welche in der zweiten Schale **4** gebildet ist, aufgefangen.

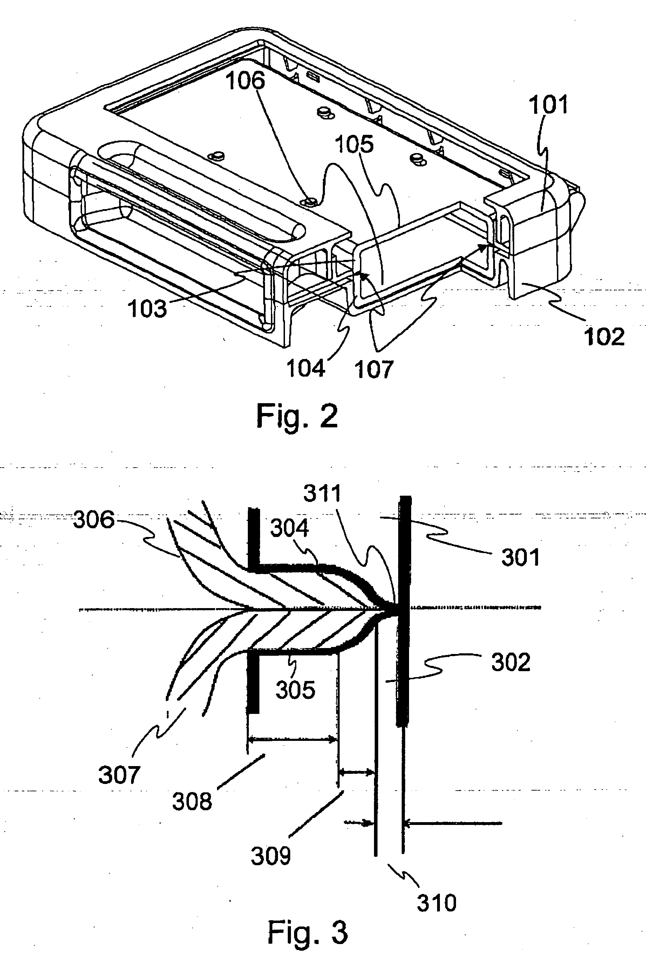

Fig. 2 zeigt eine zweite Tischvorrichtung, die im Wesentlichen der in **Fig.** 1 gezeigten ersten Tischvorrichtung entspricht. Diese zweite Tischvorrichtung ist hier in einem Aufschnitt dargestellt. Die zweite Tischvorrichtung umfasst eine dritte Schale **101**, die oben angeordnet ist, eine vierte Schale **102**, die unten angeordnet ist, einen dritten Rahmen **103** und einen vierten Rahmen **104**. Der dritte Rahmen **103** ist mit einer ersten Rahmeninnenfläche **105** und der vierte Rahmen **104** ist mit einer zweiten Rahmeninnenfläche **106** stirnseitig geschlossen. Rahmen und Rahmeninnenflächen sind hierbei einstückig als Schale ausgestaltet. Der dritte Rahmen **103** und der vierte Rahmen **104** bilden im gezeigten stirnseitig aufeinandergeklappten Zustand einen ersten Spalt **107**.

Fig. 3 zeigt einen Querschnitt eines Spaltes. Dieser Spalt entspricht im Wesentlichen dem in **Fig**. 2 bereits gezeigten Spalt. Zwischen einem fünften Rahmen **301** und einem sechsten Rahmen **302,** die hier in diesem gezeigten Querschnitt in einem Ausschnitt stirnseitig zur Deckung gebracht sind, ist ein zweiter Spalt **303** gebildet. Der fünfte Rahmen **301** und der sechste Rahmen **302** weisen ein erstes Profil **304** und ein zweites Profil **305** auf. Zwischen diesen beiden Profilen werden eine erste Teiglage **306** und eine zweite Teiglage **307** miteinander verquetscht bzw. miteinander verklebt. Die beiden Profite sind dabei so ausgestaltet, dass der zweite Spalt **303** in einem ersten Bereich **308** in etwa einer doppelten Dicke der ersten Teiglage **306** bzw. zweiten Teiglage **307** entspricht, in einem zweiten Bereich **309** stetig auf nahezu Null abnimmt, und in einem dritten Bereich **310** eine Trennkante **311** bildet. In dieser Trennkante **311** werden die obere Teiglage **306** und die untere Teiglage **307** vollständig durchtrennt. Im zweiten Bereich **309** erfolgt eine Verdichtung des Teiges, wohingegen im ersten Bereich hauptsächlich lediglich eine Verklebung der oberen Teiglage 306 mit der unteren Teiglage **307** erfolgt.

Fig. 4 zeigt eine dritte Tischvorrichtung. Die dritte Tischvorrichtung entspricht im Wesentlichen der in **Fig.** 1 gezeigten ersten Tischvorrichtung. Die dritte Tischvorrichtung umfasst eine fünfte Schale **401**, eine sechste Schale **402**, einen fünften Rahmen **403** und einen sechsten Rahmen **404**. Der fünfte Rahmen **403** und der sechste Rahmen **404** weisen eine dritte Rahmeninnenfläche **405** und eine vierte Rahmeninnenfläche **406** auf. Zur Bildung von Unterteilungen der Rahmen sind ein dritter unterer Steg **407**, ein vierter unterer Steg **408**, ein dritter oberer Steg **409** und ein vierter oberer Steg **410** vorgesehen. Beispielsweise zur Befestigung des vierten oberen Steges **410** sind ein erster Befestigungszapfen **411** und ein zweiter Befestigungszapfen **412** vorgesehen, die in einem ersten Befestigungsloch **413** und einem zweiten Befestigungsloch **414** eingerastet werden können. Das erste Befestigungsloch **413** und das zweite Befestigungsloch **414** sind dabei jeweils als Längsloch ausgestaltet mit einem variierenden Querschnitt. Entsprechend sind der erste Befestigungszapfen **411** und der zweite Befestigungszapfen **412** mit einem hammerförmigen Ende ausgestaltet, welches als Verrastmittel dient. In dem gezeigten Beispiel wird der vierte Steg **410** leicht nach links gedreht, mit dem ersten Befestigungszapfen **411** und dem zweiten Befestigungszapfen **412** in das erste Befestigungsloch **413** und das zweite Befestigungsloch **414** gesteckt und mit einer leichten Rechtsdrehung verrastet. Entsprechend erfolgt die Befestigung der übrigen Stege. Zusätzlich zur hier dargestellten Variante können auch weitere Stege mit gegebenenfalls weiteren Befestigungsvorrichtungen vorgesehen werden, welche die gezeigten Segmente abermals unterteilen.

## Patentansprüche

1. Handbetätigte Vorrichtung zur Herstellung wenigstens einer Teigtasche, umfassend einen ersten (**1**) und einen zweiten Rahmen (**2**), die mittels zumindest eines Scharnierelementes (**5**) stirnseitig aufeinanderklappbar sind, wobei der erste Rahmen (**1**) mit einem ersten (**304**) und der zweite Rahmen (**2**) mit einem zweiten stirnseitigen Quetschprofil (**305**) ausgestattet sind, durch welche in einem aufeinandergeklappten Zustand gegenüberliegende Trennkanten gebildet sind.

2. Handbetätigte Vorrichtung nach Anspruch 1, **dadurch gekennzeichnet, dass** durch das erste (**304**) und das zweite stirnseitige Quetschprofil (**305**) zwischen in einem aufeinandergeklappten Zustand gegenüberliegenden Stirnflächen des ersten (**1**) und des zweiten Rahmens (**2**) ein Spalt gebildet ist, dessen Stärke ausgehend von einem inneren Rand des Rahmens in einem ersten Bereich (**308**) in etwa einer doppelten Stärke einer Teiglage **(306; 307)** entspricht, in einem daran anschließenden zweiten Bereich (**309**) nach außen, insbesondere stetig, auf Null abnimmt, wobei durch den ersten (**1**) und den zweiten Rahmen (**2**) in einem an den zweiten Bereich (**309**) anschließenden äußeren dritten Bereich (310) zwei gegenüberliegende Trennkanten gebildet sind.

3. Handbetätigte Vorrichtung nach Anspruch 2, **dadurch gekennzeichnet, dass** eine Breite des ersten Bereiches (**308**) zwischen einer halben und einer vierfachen, bevorzugt zwischen einer einfachen und einer doppelten, Stärke der Teiglage beträgt.

4. Handbetätigte Vorrichtung nach einem der vorhergehenden Ansprüche, **dadurch gekennzeichnet, dass** der erste Rahmen (**1**) und/oder der zweite Rahmen (**2**), insbesondere reversibel lösbar, mit einer ersten Schale (**3**) und/oder einer zweiten Schale (**4**) verbunden sind.

5. Handbetätigte Vorrichtung nach Anspruch 4, **dadurch gekennzeichnet, dass** der erste (**1**) und/oder der zweite Rahmen (**2**) sowie die erste (**3**) und/oder die zweite Schale (**4**) zumindest ein Verrastelement umfassen.

6. Handbetätigte Vorrichtung nach Anspruch 4 oder 5, **dadurch gekennzeichnet, dass** das Scharnierelement (**5**) an der ersten (**3**) und/oder der zweiten Schale (**4**) und/oder einer Rahmenseite des ersten (**1**) und/oder des zweiten Rahmens (**2**) angebracht ist.

7. Handbetätigte Vorrichtung einem der vorhergehenden Ansprüche, **dadurch gekennzeichnet, dass** das Scharnierelement (**5**) wiederholbar trennbar ist.

8. Handbetätigte Vorrichtung nach einem der vorhergehenden Ansprüche, **dadurch gekennzeichnet, dass** der erste (**1**) und/oder zweite Rahmen (**2**) eine dem stirnseitigen Quetschprofil abgewandte zumindest teilweise geschlossene Stirnfläche umfasst.

9. Handbetätigte Vorrichtung nach einem der vorhergehenden Ansprüche, **dadurch gekennzeichnet, dass** Stirnflächen des ersten (**1**) und des zweiten Rahmens (**2**) jeweils eine längs der Trennkanten angeordnete Zahnung (**8**) aufweisen.

10. Handbetätigte Vorrichtung nach einem der vorhergehenden Ansprüche, **dadurch gekennzeichnet, dass** der erste (**1**) und der zweite Rahmen (**2**) jeweils mit wenigstens einem Steg unterteilbar sind, wobei der Steg ein Stirnprofil aufweist, welches zwei spiegelbildlich aneinandergesetzten Stirnprofilen eines Rahmens entspricht und insbesondere eine gemeinsame Trennkante aufweist.

11. Handbetätigte Vorrichtung nach Anspruch 9, **dadurch gekennzeichnet, dass** der Steg mittels wenigstens eines Verrastemittels mit der ersten (**3**) oder zweiten Schale (**4**) oder dem ersten (**1**) oder zweiten Rahmen (**2**) verbindbar ist.

12. Handbetätigte Vorrichtung nach einem der vorhergehenden Ansprüche, **dadurch gekennzeichnet, dass** die handbetätigte Vorrichtung auf der Unterseite wenigstens ein rutschhemmendes Element umfasst.

13. Handbetätigte Vorrichtung nach einem der vorhergehenden Ansprüche, **dadurch gekennzeichnet, dass** als Material für einen Rahmen, eine Schale, ein Scharnierelement und einen Trennsteg jeweils ein Material aus der Gruppe Kunststoff, Metall, Metalllegierung oder Holz ausgewählt ist.

14. Handbetätigte Vorrichtung nach einem der vorhergehenden Ansprüche, **dadurch gekennzeichnet, dass** sie ein Quetschprofil aus einem anderen Material als der erste (**1**) und/oder zweite Rahmen (**2**) umfasst.
